(19) Europäisches Patentamt
European Patent Office
Office européen des brevets

(11) EP 3 502 619 A1

(12) EUROPEAN PATENT APPLICATION

(43) Date of publication:
26.06.2019 Bulletin 2019/26

(51) Int Cl.:
G01C 21/16 (2006.01)    G01S 19/49 (2010.01)
G06K 9/00 (2006.01)

(21) Application number: 17210483.8

(22) Date of filing: 22.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: Koninklijke Philips N.V.
5656 AE Eindhoven (NL)

(72) Inventors:
• SAPORITO, Salvatore
5656 AE Eindhoven (NL)
• TEN KATE, Warner Rudolph Theophile
5656 AE Eindhoven (NL)

(74) Representative: de Haan, Poul Erik
Philips International B.V.
Philips Intellectual Property & Standards
High Tech Campus 5
5656 AE Eindhoven (NL)

(54) METHOD AND APPARATUS FOR DETERMINING WHETHER A SUBJECT HAS ENTERED OR EXITED A BUILDING

(57) According to an aspect, there is provided an apparatus (52) for determining whether a subject has entered or exited a building, wherein the apparatus (52) is configured to obtain air pressure measurements from an air pressure sensor (58; 60) associated with the subject, wherein the air pressure measurements comprise a first plurality of air pressure measurement samples; determine one or more of: a first autocorrelation signal for the first plurality of air pressure measurement samples at a first time lag; a distribution of air pressures for the first plurality of air pressure measurement samples; a distribution of air pressure differences for the first plurality of air pressure measurement samples, wherein each air pressure difference is the difference between the value of a first air pressure measurement sample in the first plurality of air pressure measurement samples and the value of an air pressure measurement sample in the first plurality of air pressure measurement samples that is a second time lag before the first air pressure measurement sample; and analyse the determined first autocorrelation signal, the determined distribution of air pressures and/or determined distribution to determine one or more indications of whether the subject has entered or exited a building; and determine whether the subject has entered or exited a building based on the determined one or more indications. A corresponding computer-implemented method and computer program product are also provided.

Fig. 5

**Description**

FIELD OF THE INVENTION

The disclosure relates to the monitoring of a subject, and in particular to a method and apparatus for determining whether a subject has entered or exited a building.

BACKGROUND OF THE INVENTION

The incidence and prevalence of dementia is expected to dramatically increase in the near future due to the ongoing rise in life expectancy and consequent increase in the size of the elderly population. These trends will result in a significant increase in the economic burden of the disease on society and caregivers, as many people with dementia will continue to live in the community rather than a care environment.

Wandering is one of the behavioural problems affecting people with dementia and is among the major concerns for caregivers. Wandering can pose severe risks for personal safety and security, and it may result in the person getting lost outdoors. As such, various approaches have been developed that can be used to monitor or track the location for a person, and can be used by people with dementia. Several of these approaches have been developed so that they can be used in a device that can be carried or worn by the person, including in a mobile telephone or smartphone.

For example user-worn or carried devices that include Global Positioning System (GPS) receivers can be used to determine the location of the device and thus the person. Some approaches use the performance degradation of GPS signal when indoors to infer whether the user of the device is indoors or outdoors. However, GPS-based approaches have high hardware costs, high energy consumption, and have a long response time. Moreover, the location accuracy is low in indoor conditions, which can leave only the signal accuracy (e.g. GPS confidence level) as a possible marker for being indoors or outdoors. However this also has a high power consumption and is considered unreliable as factors other than whether the device is indoors can influence the accuracy of a GPS signal/GPS position measurement.

The received signal power from a WiFi network depends the position of a receiving device with respect to the WiFi transmitter, and this can be used to infer whether the device is inside or outside a building. Alternatively, radio-frequency transmitters such as RF Identity (RFID) tags, Bluetooth, or WiFi interfaces can be used. However, these approaches also result in a high power consumption, which is a problem for compact portable devices in which these receivers are present.

Another approach measures the variance of the magnetic field to determine the indoor/outdoor status, based on the assumption that man-made artefacts typically present indoors would locally perturbate the background intensity of the Earth's magnetic field. However, magnetic sensor-based approaches may suffer from medium to long term signal drift, which means that frequent sensor recalibration is required. Their sensitivity could be increased by applying magnetic 'tags' to certain building locations, but such modifications might not be possible in all households. The sensitivity of approaches that use RF receivers could be improved in the same way, but would also suffer from similar disadvantages.

Yet another approach uses ultrasonic signals, and involves the transmission of an ultrasonic pulse by a loudspeaker and the recording of the resulting echo using a microphone to determine whether the user is indoors or outdoors. Ultrasonic-based methods could be used by low-power hardware such as mobile telephones or smartphones. However, a drawback is that low-level access to the microphone and speaker in such a device is required (e.g. to disable echo-cancellation features) and such a method may temporarily disrupt other, potentially critical, uses of loudspeakers and/or microphones (e.g. as part of a personal emergency response system).

Another approach can determine the indoor/outdoor status from the measured light intensity. Light measurements by light sensors can be influenced by obstructions in the environment (e.g. if the device is put into a user's pocket or covered by their clothing) and might perform poorly during the night when the risks associated with wandering are higher.

Yet another approach uses camera(s) or passive-infrared (PIR) sensor(s) to detect the user crossing a certain point (e.g. at a door). However, solutions based on the use of camera(s) raise privacy concerns for consumers (and the same can be said for GPS and other location-based solutions). PIR-based solutions provide less privacy concerns, but they cannot distinguish between different subjects present within the same environment.

Therefore there is a need for an alternative approach to determining whether a subject has entered or exited (left) a building that addresses some or all of the issues with the existing techniques.

SUMMARY OF THE INVENTION

According to a first specific aspect, there is provided an apparatus for determining whether a subject has entered or exited a building, wherein the apparatus is configured to obtain air pressure measurements from an air pressure sensor associated with the subject, wherein the air pressure measurements comprise a first plurality of air pressure measurement samples; determine one or more of a first autocorrelation signal for the first plurality of air pressure measurement samples at a first time lag; a distribution of air pressures for the first plurality of air pressure measurement samples; a distribution of air pressure differences for the first plurality of air pressure measurement samples, wherein each air pressure difference is the difference between the value of a first air pressure measurement sample in the first plurality of air pressure measurement samples and the value of an air pressure measurement sample in the first plurality of air pressure measurement samples that is a second time lag before the first air pressure measurement sample; and analyse the determined first autocorrelation signal, the determined distribution of air pressures and/or determined distribution to determine one or more indications of whether the subject has entered or exited a building; and determine whether the subject has entered or exited a building based on the determined one or more indications.

In some embodiments, the apparatus is configured to analyse the determined first autocorrelation signal to determine a first indication of whether the subject has entered or exited a building by determining a change between at least a first autocorrelation value in the first autocorrelation signal and a second autocorrelation value in the first autocorrelation signal relating to an earlier air pressure measurement sample; wherein the apparatus is configured to determine the first indication of whether the subject has entered or exited a building based on the determined change.

In some embodiments, the apparatus is configured to determine the first indication as indicating that the subject has entered a building if the determined change indicates an increase and the magnitude of the increase in the first autocorrelation signal exceeds a first threshold value.

In some embodiments, the apparatus is configured to determine the first indication as indicating that the subject has exited a building if the determined change indicates a decrease and the magnitude of the decrease in the first autocorrelation signal exceeds a second threshold value.

In some embodiments, the apparatus is further configured to determine the first time lag to use for determining the first autocorrelation signal by obtaining a second plurality of air pressure measurement samples for air pressure measurements inside a building during a first time period; obtaining a third plurality of air pressure measurement samples for air pressure measurements outside a building during the first time period; determining the autocorrelation of the second plurality of air pressure measurement samples as a function of time lag; determining the autocorrelation of the third plurality of air pressure measurement samples as a function of time lag; comparing the determined autocorrelation of the second plurality of air pressure measurement samples and the determined autocorrelation of the third plurality of air pressure measurement samples to determine the first time lag.

In some embodiments, the apparatus is configured to analyse the determined distribution of air pressures to determine a second indication of whether the subject has entered or exited a building by determining a characteristic of the distribution of air pressures; and determining a second indication of whether the subject has entered or exited a building based on the determined characteristic; wherein the characteristic is one or more of a statistical dispersion measure, a central value, a maximum value and a minimum value.

In these embodiments, the apparatus can be configured to determine a characteristic change by comparing the determined characteristic to a characteristic determined from a second plurality of air pressure measurement samples for an earlier time period; wherein the apparatus is configured determine the second indication of whether the subject has entered or exited a building based on the determined characteristic change.

In some embodiments, the apparatus is configured to analyse the determined distribution of air pressure differences to determine a third indication of whether the subject has entered or exited a building by determining a characteristic of the distribution of air pressure differences; and determining a third indication of whether the subject has entered or exited a building based on the determined characteristic; wherein the characteristic is one or more of a statistical dispersion measure, a central value, a maximum value and a minimum value.

In these embodiments, the apparatus can be configured to determine a characteristic change by comparing the determined characteristic to a characteristic determined from a second plurality of air pressure measurement samples for an earlier time period; wherein the apparatus is configured determine the third indication of whether the subject has entered or exited a building based on the determined characteristic change.

In some embodiments, the apparatus is further configured to maintain a value of an indoor/outdoor status for the subject.

In these embodiments, the apparatus can be configured to determine whether the subject has exited a building based on the determined first autocorrelation signal, determined distribution of air pressures and/or determined distribution if the value of the indoor/outdoor status for the subject indicates that the subject is indoors.

In these embodiments, the apparatus can be further configured to update the value of the indoor/outdoor status for the subject to indicate that the subject is outdoors if it is determined that the subject has exited a building.

In some embodiments, the apparatus is configured to determine whether the subject has entered a building based on the determined first autocorrelation signal, determined distribution of air pressures and/or determined distribution if the value of the indoor/outdoor status for the subject indicates that the subject is outdoors.

In some embodiments, the apparatus is further configured to update the value of the indoor/outdoor status for the subject to indicate that the subject is indoors if it is determined that the subject has entered a building.

In some embodiments, the apparatus is further configured to obtain measurements from one or more additional sensors; and determine whether the subject has entered or exited a building based on the determined one or more indications and the measurements from the one or more additional sensors.

In these embodiments, the one or more additional sensors can comprise one or more of an accelerometer for measuring the movements of the subject, a location sensor for determining the location of the subject, a camera for monitoring a region of interest, a passive infra-red, PIR, sensor for monitoring a region of interest and a door sensor for monitoring the opening and/or closing of a door.

In some embodiments, the apparatus is further configured to output a signal if it is determined that the subject has entered or exited a building.

In some embodiments, the apparatus comprises an air pressure sensor.

In alternative embodiments, the apparatus is configured to obtain the air pressure measurements from an air pressure sensor.

According to a second aspect, there is provided a computer-implemented method of determining whether a subject has entered or exited a building, the method comprising: obtaining air pressure measurements from an air pressure sensor associated with the subject, wherein the air pressure measurements comprise a first plurality of air pressure measurement samples; determining one or more of a first autocorrelation signal for the first plurality of air pressure measurement samples at a first time lag; a distribution of air pressures for the first plurality of air pressure measurement samples; a distribution of air pressure differences for the first plurality of air pressure measurement samples, wherein each air pressure difference is the difference between the value of a first air pressure measurement sample in the first plurality of air pressure measurement samples and the value of an air pressure measurement sample in the first plurality of air pressure measurement samples that is a second time lag before the first air pressure measurement sample; and analysing the determined first autocorrelation signal, the determined distribution of air pressures and/or determined distribution to determine one or more indications of whether the subject has entered or exited a building; and determining whether the subject has entered or exited a building based on the determined one or more indications.

In some embodiments, the method comprises analysing the determined first autocorrelation signal to determine a first indication of whether the subject has entered or exited a building by determining a change between at least a first autocorrelation value in the first autocorrelation signal and a second autocorrelation value in the first autocorrelation signal relating to an earlier air pressure measurement sample; wherein the method comprises determining the first indication of whether the subject has entered or exited a building based on the determined change.

In some embodiments, the method comprises determining the first indication as indicating that the subject has entered a building if the determined change indicates an increase and the magnitude of the increase in the first autocorrelation signal exceeds a first threshold value.

In some embodiments, the method comprises determining the first indication as indicating that the subject has exited a building if the determined change indicates a decrease and the magnitude of the decrease in the first autocorrelation signal exceeds a second threshold value.

In some embodiments, the method further comprises determining the first time lag to use for determining the first autocorrelation signal by obtaining a second plurality of air pressure measurement samples for air pressure measurements inside a building during a first time period; obtaining a third plurality of air pressure measurement samples for air pressure measurements outside a building during the first time period; determining the autocorrelation of the second plurality of air pressure measurement samples as a function of time lag; determining the autocorrelation of the third plurality of air pressure measurement samples as a function of time lag; comparing the determined autocorrelation of the second plurality of air pressure measurement samples and the determined autocorrelation of the third plurality of air pressure measurement samples to determine the first time lag.

In some embodiments, the method comprises analysing the determined distribution of air pressures to determine a second indication of whether the subject has entered or exited a building by determining a characteristic of the distribution of air pressures; and determining a second indication of whether the subject has entered or exited a building based on the determined characteristic; wherein the characteristic is one or more of a statistical dispersion measure, a central value, a maximum value and a minimum value.

In these embodiments, the method comprises determining a characteristic change by comparing the determined characteristic to a characteristic determined from a second plurality of air pressure measurement samples for an earlier time period; wherein the method comprises determining the second indication of whether the subject has entered or exited a building based on the determined characteristic change.

In some embodiments, the method comprises analysing the determined distribution of air pressure differences to determine a third indication of whether the subject has entered or exited a building by determining a characteristic of the distribution of air pressure differences; and determining a third indication of whether the subject has entered or exited a building based on the determined characteristic; wherein the characteristic is one or more of a statistical dispersion measure, a central value, a maximum value and a minimum value.

In these embodiments, the method comprises determining a characteristic change by comparing the determined characteristic to a characteristic determined from a second plurality of air pressure measurement samples for an earlier time period; wherein the method comprises determining the third indication of whether the subject has entered or exited a building based on the determined characteristic change.

In some embodiments, the method further comprises maintaining a value of an indoor/outdoor status for the subject.

In these embodiments, the method comprises determining whether the subject has exited a building based on the determined first autocorrelation signal, determined distribution of air pressures and/or determined distribution if the value of the indoor/outdoor status for the subject indicates that the subject is indoors.

In these embodiments, the method further comprises updating the value of the indoor/outdoor status for the subject to indicate that the subject is outdoors if it is determined that the subject has exited a building.

In some embodiments, the method comprises determining whether the subject has entered a building based on the determined first autocorrelation signal, determined distribution of air pressures and/or determined distribution if the value of the indoor/outdoor status for the subject indicates that the subject is outdoors.

In some embodiments, the method comprises updating the value of the indoor/outdoor status for the subject to indicate that the subject is indoors if it is determined that the subject has entered a building.

In some embodiments, the method comprises obtaining measurements from one or more additional sensors; and determining whether the subject has entered or exited a building based on the determined one or more indications and the measurements from the one or more additional sensors.

In these embodiments, the one or more additional sensors can comprise one or more of an accelerometer for measuring the movements of the subject, a location sensor for determining the location of the subject, a camera for monitoring a region of interest, a passive infra-red, PIR, sensor for monitoring a region of interest and a door sensor for monitoring the opening and/or closing of a door.

In some embodiments, the method further comprises outputting a signal if it is determined that the subject has entered or exited a building.

In some embodiments, the method is performed by an apparatus that comprises an air pressure sensor.

In alternative embodiments, the method is performed by an apparatus, and the apparatus is configured to obtain the air pressure measurements from an air pressure sensor.

According to a third aspect, there is provided a computer program product comprising a computer readable medium having computer readable code embodied therein, the computer readable code being configured such that, on execution by a suitable computer or processor, the computer or processor is caused to perform the method according to the second aspect or any embodiment thereof.

These and other aspects will be apparent from and elucidated with reference to the embodiment(s) described hereinafter.

BRIEF DESCRIPTION OF THE DRAWINGS

Exemplary embodiments will now be described, by way of example only, with reference to the following drawings, in which:

Fig. 1 is a graph illustrating measurements of air pressure inside a building and outside a building during a time period;
Fig. 2 shows two graphs illustrating measurements over time of acceleration and air pressure respectively;
Fig. 3 is a set of graphs illustrating the autocorrelation of air pressure measurements for different lag values;
Fig. 4 is a set of graphs illustrating exemplary distributions of air pressure changes;
Fig. 5 is a block diagram of an apparatus according to an exemplary embodiment;
Fig. 6 is a flow chart illustrating a method according to an exemplary embodiment; and
Fig. 7 shows two graphs illustrating air pressure measurements and autocorrelation of air pressure.

DETAILED DESCRIPTION OF EMBODIMENTS

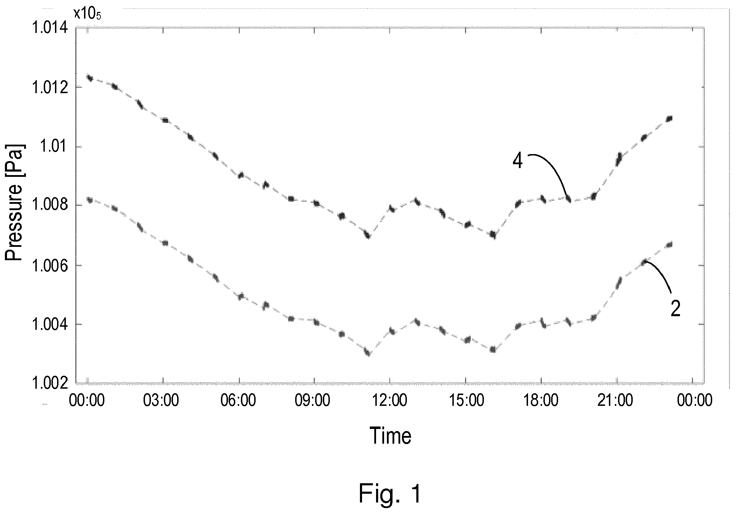

As noted above, the present disclosure provides an alternative approach to determining whether a subject has entered or exited (left) a building. In particular the approach described herein makes use of measurements of air pressure at or near the subject of interest (i.e. the person for which the indoors/outdoors status is being tracked). The graph in Fig. 1 shows two sets of air pressure measurements obtained over a period of 24 hours. One set of measurements 2 was obtained using an air pressure sensor located inside a building, and the other set of measurements 4 was obtained using an air pressure sensor located outside a building. It can be seen that the two sets of measurements 2, 4 follow similar profiles over the monitoring time period, but the air pressure measured outside was consistently higher than the air pressure measured inside (by around $0.005 \times 10^5$ Pa). This can be due to differences in temperature and humidity (and hence mass density) between (potentially conditioned) indoor and outdoor air. Temperature causes differences in pressure according to the state equation for (ideal) gases, known from classic thermodynamics (i.e. pressure/temperature = constant). A reduction in mass density (more vapour instead of oxygen and nitrogen molecules lowers mass density) leads to reduced pressure by the reduced weight of the total mass in the column above the measurement point.

The techniques described herein exploit the empirically observed differences in air pressure and in fluctuations in air pressure in indoor and outdoor environments. In general, the smaller air volume in confined indoor environments (i.e. inside a building) results in stronger temporal autocorrelation of local pressure fluctuations. Thus, signal features obtained from air pressure measurements obtained indoors are numerically different from signal features obtained from air pressure measurements obtained outdoors. Therefore, observing changes in these signal features makes it possible to detect when a subject enters a building or exits a building.

In particular, when considering the differences in air pressure at a given time lag $\tau$ (which can be tuned or adjusted to a required value), it has been found that the autocorrelation as a function of $\tau$ decays faster for air pressure measured outdoors than air pressure measured indoors with increasing $\tau$. For $\tau = 0$, the autocorrelation is 1, for $\tau \to \infty$ it vanishes to 0 (for most common types of signals). Therefore, by selecting a finite $\tau > 0$, it is possible to observe a decrease in autocorrelation when exiting a building. Compared to existing solutions, techniques based on air (barometric) pressure sensors and measurements provide an inexpensive, low-power alternative that can use widely available hardware (e.g. an air pressure sensor is often included in a smartphone), with limited to no privacy concerns.

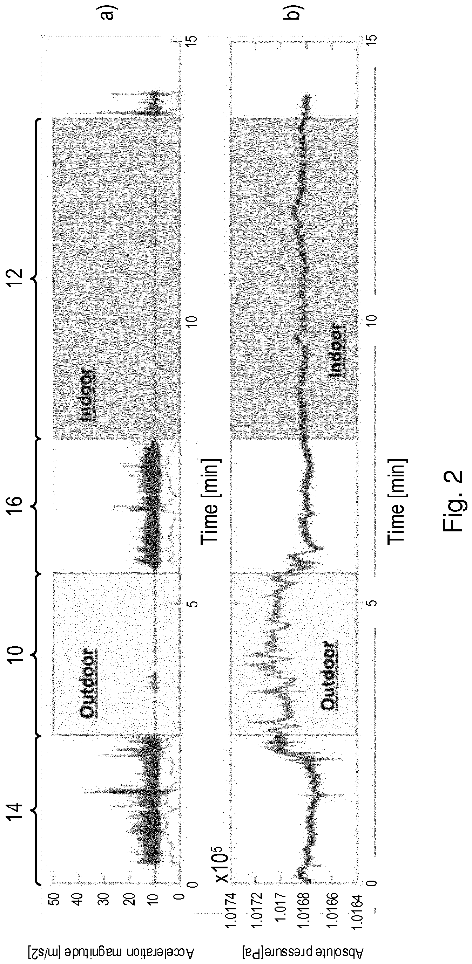

The graphs in Fig. 2 show exemplary measurements of acceleration over time obtained by an accelerometer carried or worn by a subject (Fig. 2(a)) and measurements of air pressure over (the same) time by an air pressure sensor carried or worn by the subject (Fig. 2(b)). In particular, the time period includes a first time period 10 in which the subject was outdoors/outside a building with limited motion (as indicated by the relatively constant acceleration magnitude (around 10ms$^{-2}$ ≈ acceleration due to gravity)), and a second time period 12 in which the subject was indoors/inside a building with limited motion. Two other time periods 14, 16 are shown in which the subject was in motion (as indicated by the measured acceleration). It can be seen in Fig. 2(b) that the profile of the air pressure during time period 10 when the subject is outside is quite different to the profile of the air pressure during time period 12 when the subject is inside.

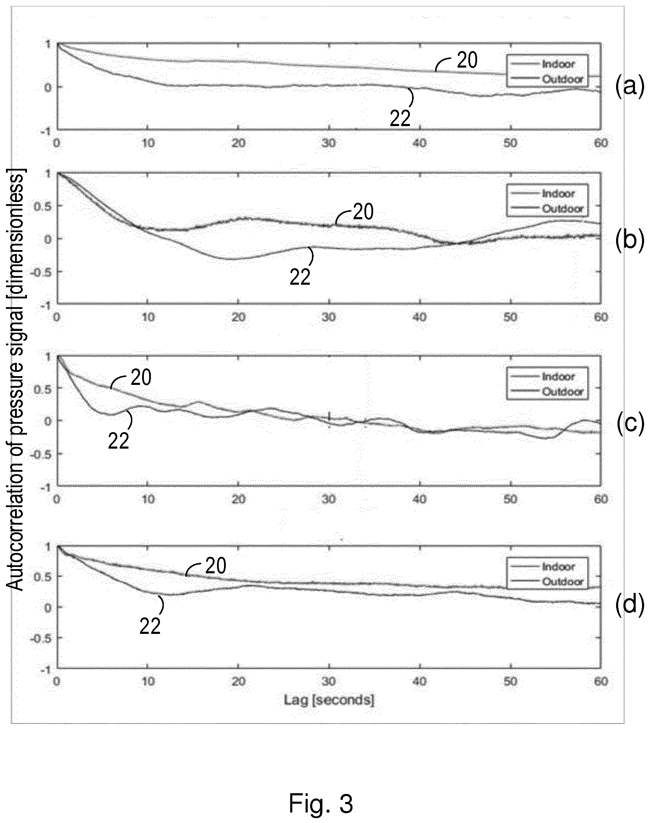

The graphs in Fig. 3 illustrate how the autocorrelation of a pressure signal (pressure measurements) changes as a function of time lag. As is known, the autocorrelation of a signal is the correlation of the signal with a time-delayed copy of the signal. The time delay, or time lag, represents the time between the signal and the time-delayed copy. Each of the graphs in Fig. 3 indicates the autocorrelation 20 as a function of time lag (for time lags from 0 seconds where the autocorrelation is high (e.g. 1 or close to 1) to 60 seconds) for a set of air pressure measurements obtained using an air pressure sensor located inside a building, and the autocorrelation 22 as a function of time lag for a set of air pressure measurements obtained for the same time period using an air pressure sensor located outside a building. Each of Figs. 3(a), 3(b), 3(c) and 3(d) is formed from a set of measurements of air pressure for respectively different time periods/scenarios (e.g. in different types of buildings, on days with different weather conditions, etc.). It can be seen in each of Figs. 3(a)-(d) that the autocorrelation for the air pressures measured indoors (line 20) decays more slowly with increasing time lag than the autocorrelation for the air pressures measured outdoors (line 22). Thus, it can be seen from Fig. 3 that when a subject enters or exits a building, there will be a change in the autocorrelation of the measured air pressure at at least some values for the time lag, and therefore in some embodiments of the techniques described herein an autocorrelation signal can be determined and analysed to determine whether the subject has entered or exited a building.

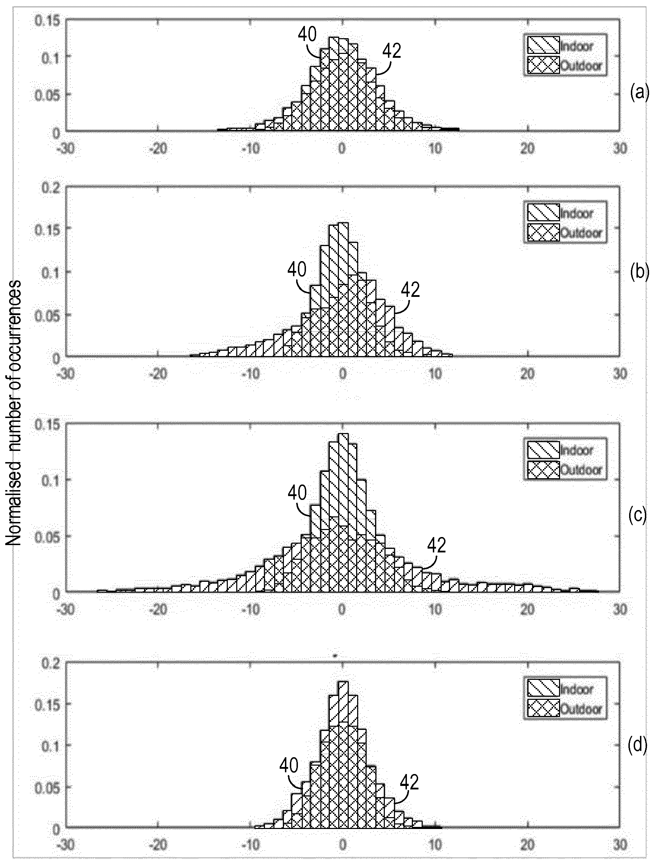

The graphs of Fig. 4 illustrate how distributions of air pressure changes vary for indoor and outdoor air pressure measurements. Figs. 4(a)-(d) are based on the same sets of measurements used to generate the graphs in Figs. 3(a)-(d) respectively, with the distribution 40 for the indoor measurements being superimposed on the distribution 42 for the outdoor measurements. The distributions (histograms) are formed by determining air pressure difference/air pressure change values for each air pressure measurement, and determining the frequency (number of occurrences) of different values of the air pressure change. In particular, for a first air pressure measurement, an air pressure difference value is determined as the difference between the value of the first air pressure measurement and the value of an air pressure measurement some time before the first air pressure measurement, and this determined difference value is put into an appropriate 'bin' in the histogram or distribution. The time between the two air pressure measurements that are used to determine a difference value is also referred to as a time lag or time difference, and can be of the order of several seconds (e.g. 1 second to 30 seconds). In the graphs of Fig. 4, the air pressure difference values are determined using a time lag of 12 seconds (so a difference value for a particular air pressure measurement is the difference between that air pressure measurement and the air pressure measurement that is 12 seconds earlier).

The centre of the distributions in each of Fig. 4(a)-(d) corresponds to a difference value of 0, and it can be seen that air pressure measurements obtained outside a building result in a wider distribution 42 of air pressure differences with larger pressure changes occurring more frequently than the air pressure difference distribution 40 for air pressure measurements obtained inside a building (which also indicates a lower air pressure autocorrelation). Thus, it can be seen from Fig. 4 that when a subject enters or exits a building, there will be a change in the distribution (or characteristics of the distribution) of air pressure differences/changes, and therefore in some embodiments of the techniques described herein a distribution of air pressure differences can be determined and analysed to determine whether the subject has entered or exited a building. Although not shown in Fig. 4, a distribution of air pressure itself (which could be centred around 1000 hPa when at sea level), might also be wider for air pressure measurements obtained outside.

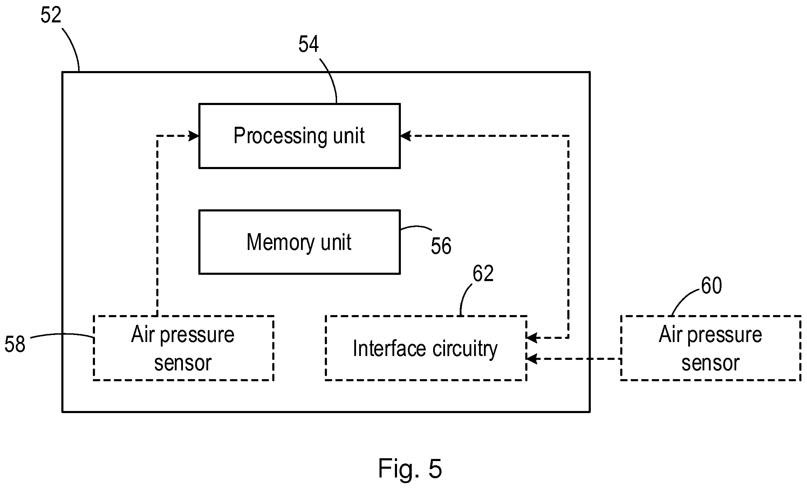

Fig. 5 shows an apparatus 52 according to various embodiments. The apparatus 52 is for determining whether a subject has entered or exited a building, and in particular the apparatus 52 determines whether the subject has entered or exited a building based on measurements of air pressure. Thus, the apparatus 52 is provided to analyse or process the measurements of air pressure to determine whether there has been an indoor-to-outdoor transition (i.e. the subject has exited a building) or an outdoor-to-indoor transition (i.e. the subject has entered a building).

The apparatus 52 includes a processing unit 54 that controls the operation of the apparatus 52 and that can be configured to execute or perform the methods described herein. The processing unit 54 can be implemented in numerous ways, with software and/or hardware, to perform the various functions described herein. The processing unit 54 may comprise one or more microprocessors or digital signal processor (DSPs) that may be programmed using software or computer program code to perform the required functions and/or to control components of the processing unit 54 to effect the required functions. The processing unit 54 may be implemented as a combination of dedicated hardware to perform some functions (e.g. amplifiers, pre-amplifiers, analog-to-digital convertors (ADCs) and/or digital-to-analog convertors (DACs)) and a processor (e.g., one or more programmed microprocessors, controllers, DSPs and associated circuitry) to perform other functions. Examples of components that may be employed in various embodiments of the present disclosure include, but are not limited to, conventional microprocessors, DSPs, application specific integrated circuits (ASICs), and field-programmable gate arrays (FPGAs).

The processing unit 54 is connected to a memory unit 56 that can store data, information and/or signals for use by the processing unit 54 in controlling the operation of the apparatus 52 and/or in executing or performing the methods described herein. In some implementations the memory unit 56 stores computer-readable code that can be executed by the processing unit 54 so that the processing unit 54 performs one or more functions, including the methods described herein. The memory unit 56 can comprise any type of non-transitory machine-readable medium, such as cache or system memory including volatile and non-volatile computer memory such as random access memory (RAM) static RAM (SRAM), dynamic RAM (DRAM), read-only memory (ROM), programmable ROM (PROM), erasable PROM (EPROM), and electrically erasable PROM (EEPROM).

As noted above, the apparatus 52 determines whether the subject has entered or exited a building based on measurements of air pressure. The air pressure is measured by an air pressure sensor that is carried or worn by the subject. The air pressure sensor can have any desired sampling frequency, for example ranging from one measurement per second (1 Hz) to 50 measurements per second (50 Hz), and thus the air pressure sensor generates a time series (plurality) of air pressure measurement samples representing the air pressure over time.

In some embodiments, the apparatus 52 comprises an air pressure sensor 58 (which is also known as a barometric pressure sensor). In these embodiments, the apparatus 52 can be in a form that can be carried or worn by the subject. For example the apparatus 52 can be in the form of, or be part of, a smartphone, a smart watch, a tablet computer, a pendant (for example a personal emergency response system pendant), a wristband, chest band, an item of clothing, etc. The air pressure sensor 58 is provided to measure air pressure in the environment around the apparatus 52 (and thus measure air pressure in the environment around the subject when the apparatus 52 is being carried or worn by the subject). The air pressure sensor 58 is connected to the processing unit 54 and provides the air pressure measurements to the processing unit 54 for analysis or processing.

In alternative embodiments, an air pressure sensor 60 is provided that is separate to the apparatus 52 (in which case the apparatus 52 does not include its own air pressure sensor 58). In these embodiments, the air pressure sensor 60 can be in a form that can be carried or worn by the subject (for example the air pressure sensor 60 can be part of a device that is in a form that can be carried or worn by the subject). In this case the air pressure sensor 60, or device that the air pressure sensor 60 is part of, can be in the form of, or be part of, a smartphone, a smart watch, a tablet computer, a pendant (for example a personal emergency response system pendant), a wristband, chest band, an item of clothing, etc. In these embodiments, the air pressure sensor 58 is provided to measure air pressure in the environment around the subject, and the measurements of the air pressure are provided to the apparatus 52 for analysis and/or processing. Thus, the apparatus 52 can include interface circuitry 62 that can enable a data connection to and/or data exchange with other devices, including any one or more of servers, databases, user devices (e.g. including a device that includes air pressure sensor 60), and sensors (e.g. air pressure sensor 60). The interface circuitry 62 can enable a connection between the apparatus 52 and a network, such as the Internet, via any desirable wired or wireless communication protocol. For example, the interface circuitry 62 can operate using WiFi, Bluetooth, Zigbee, or any cellular communication protocol (including but not limited to Global System for Mobile Communications (GSM), Universal Mobile Telecommunications System (UMTS), Long Term Evolution (LTE), LTE-Advanced, etc.). The interface circuitry 62 is connected to the processing unit 54. In these embodiments, the apparatus 52 can be any type of electronic device or computing device. For example the apparatus 52 can be, or be part of, a server, a computer, a laptop, a tablet, a smartphone, smartwatch etc.

It will be appreciated that the apparatus 52 can also include the interface circuitry 62 in embodiments where the apparatus 52 includes the air pressure sensor 58.

Although not shown in Fig. 5, the apparatus 52 can also include or comprise a user interface that includes one or more components that enables a user of apparatus 52 to input information, data and/or commands into the apparatus 52, and/or enables the apparatus 52 to output information or data to the user of the apparatus 52. The user interface can comprise any suitable input component(s), including but not limited to a keyboard, keypad, one or more buttons, switches or dials, a mouse, a track pad, a touchscreen, a stylus, a camera, a microphone, etc., and the user interface can comprise any suitable output component(s), including but not limited to a display screen, one or more lights or light elements, one or more loudspeakers, a vibrating element, etc. It will be appreciated that a user of the apparatus 52 may be the subject that is being monitored, and/or the user may be a party or person that is interested in the location of the subject that is being monitored (e.g. the party or person may be a family member of the subject, a care provider or clinician).

It will be appreciated that a practical implementation of an apparatus 52 may include additional components to those shown in Fig. 5. For example the apparatus 52 may also include a power supply, such as a battery, or components for enabling the apparatus 52 to be connected to a mains power supply.

In further embodiments, the apparatus 52 may make use of measurements by one or more other sensors to determine whether the subject has entered or exited a building. In these embodiments, the apparatus 52 can include or comprise these one or more other sensors, or they can be separate from the apparatus 52 (in a similar way to air pressure sensor 60). The one or more other sensors can be or include an accelerometer that can be worn or carried by the subject to measure the movements of the subject. The accelerometer can be a three-dimensional accelerometer for measuring the accelerations of the subject in three dimensions. The one or more other sensors can be or include one or more PIR sensors that can be placed in the environment in which the subject is often located, e.g. in their house, or a particular room or rooms (bedroom, lounge, kitchen, etc.), or outside their house (e.g. by the exit door(s)).

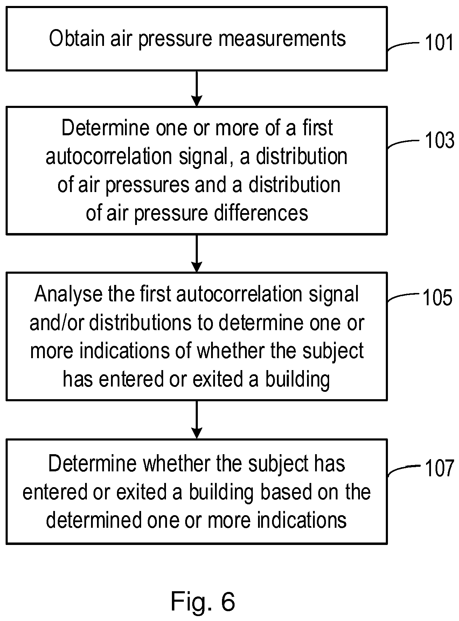

The flow chart in Fig. 6 illustrates an exemplary method of determining whether a subject has entered or exited a building (or method of operating an apparatus 52 to determine whether a subject has entered or exited a building) according to various embodiments. The steps can be performed by the processing unit 54. In some embodiments, the processing unit 54 can perform the steps as a result of executing suitable program code stored in the memory unit 56.

In a first step, step 101, measurements of air pressure at or near a subject of interest are obtained. The measurements of air pressure are generated by an air pressure sensor 58 or 60 that is carried or worn by the subject. Step 101 can comprise the processing unit 54 obtaining the measurements directly from the air pressure sensor 58, 60, obtaining air pressure measurements from the memory unit 56 (that have been generated by the air pressure sensor 58, 60 and stored in the memory unit 56) or obtaining the air pressure measurements from another device. In any case, the air pressure measurements comprise a first plurality of air pressure measurement samples.

In step 103, the processing unit 54 determines one or more of a first autocorrelation signal for the first plurality of air pressure measurement samples at a first time lag, a distribution of air pressures for the first plurality of air pressure measurement samples, and a distribution of air pressure differences for the first plurality of air pressure measurement samples. It will be appreciated that where air pressure measurements are collected continuously, step 103 can operate on a set of recently obtained air pressure measurements (which can also be considered a window on the measurements), and as the method in Fig. 6 is repeated over time, the window can be 'slid' along the measurements so that the most recent measurements continue to be analysed in step 103 onwards.

That is, in some embodiments, the processing unit 54 can determine a signal representing the autocorrelation of the air pressure measurement samples as a function of time, with the autocorrelation being determined for a particular time lag. Thus, the first autocorrelation signal represents the change in autocorrelation of the air pressure measurement samples over time at a constant time lag (which is in contrast to the autocorrelation signals shown in Fig. 3 which show how autocorrelation changes with varying time lag).

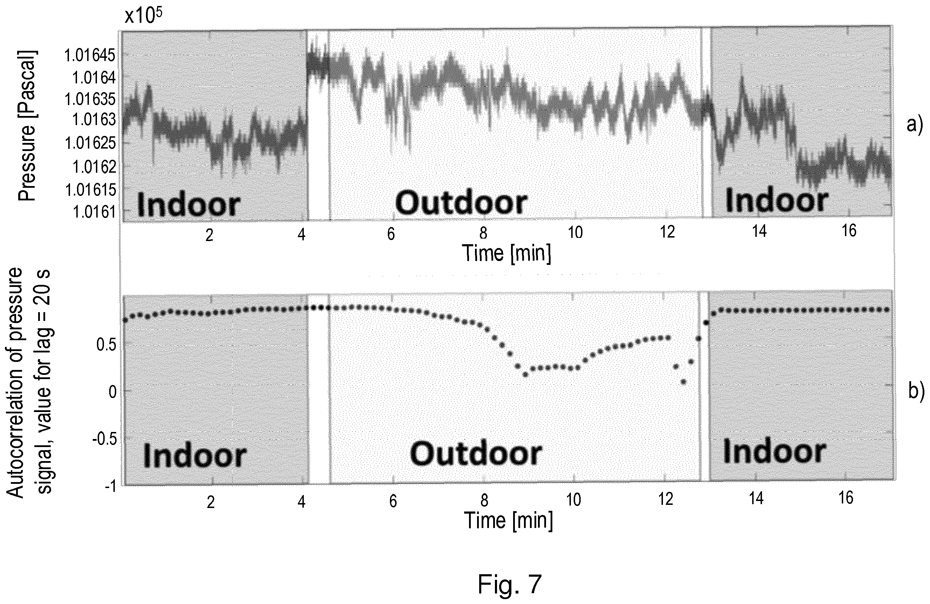

Fig. 7(a) shows an exemplary set of air pressure measurements for a 31 minute-long time period, and Fig. 7(b) shows a first autocorrelation signal determined from the air pressure measurements in Fig. 7(a) with a time lag of 20 seconds. It can be seen from Fig. 7(b) that the autocorrelation can be determined with a lower frequency than that at which the air pressure measurements are obtained (as represented by the data points making up the autocorrelation signal in Fig. 7(b)).

In the case of a distribution of air pressures, the processing unit 54 forms the distribution from the first plurality of air pressure measurement samples.

In the case of a distribution of air pressure differences, the processing unit 54 determines a series of air pressure difference values from the first plurality of air pressure measurement samples, and forms a distribution of these values. Each air pressure difference is the difference between the value of a first air pressure measurement sample in the first plurality of air pressure measurement samples and the value of an air pressure measurement sample in the first plurality of air pressure measurement samples that is some time before the first air pressure measurement sample. This 'some time' is referred to as a 'second time lag' herein (and can be understood as a time delay or time difference). The second time lag may be the same as or different to the first time lag used to determine the first autocorrelation signal.

Next, in step 105, the processing unit 54 analyses the determined first autocorrelation signal, the determined distribution of air pressures and/or the determined distribution of air pressure differences (as appropriate based on which of these was determined in step 103) to determine one or more indications of whether the subject has entered or exited a building. As noted in more detail below, although a single characteristic of the first autocorrelation signal, the distribution of air pressures or the distribution of air pressure differences can be used to determine whether the subject has entered or exited a building, the reliability of the result of the method can be increased by extracting values for several characteristics of the first autocorrelation signal, the distribution of air pressures and/or distribution of air pressure differences, with each of these characteristics providing a respective indication of whether the subject has entered or exited a building (or whether there has not been any change in the indoor/outdoor status of the subject).

In some embodiments, in step 103 more than one autocorrelation signal can be determined and/or more than one distribution of air pressure differences can be determined. For example at least a second autocorrelation signal can be determined for the first plurality of air pressure measurement samples at a different time lag to the first time lag. As another example, a second distribution of air pressure differences can be determined for the first plurality of air pressure measurement samples based on air pressure differences determined for a different time difference to the second time difference. In these embodiments, step 105 can also comprise analysing the determined second (and subsequent, if appropriate) autocorrelation signal(s) and/or the second (and subsequent, if appropriate) determined distribution(s) of air pressure differences to determine some additional indications of whether the subject has entered or exited a building.

Finally, in step 107, the processing unit 54 can determine whether the subject has entered or exited a building based on the one or more indications determined in step 105. Thus, in the case of a single indication being determined in step 105, step 107 can comprise using that indication as the output of the method. In the case of multiple indications being determined in step 105, step 107 can comprise determining whether the subject has entered or exited a building based on some combination of the indications. For example, step 107 can comprise determining the output as the subject has entered or exited a building (as appropriate) if all or a majority of the indications indicate that the subject has entered/exited a building. Alternatively, step 107 can comprise determining the output as the subject has entered or exited a building (as appropriate) based on a sum or weighted sum of the indications. Those skilled in the art will be aware of other ways in which the indications can be combined or otherwise evaluated to determine an outcome indicating whether the subject has entered or exited a building.

In some embodiments, after step 107, the method can comprise outputting a signal if it is determined that the subject has entered or exited a building. In some embodiments, the signal indicate whether the subject has entered the building, or exited the building. In some embodiments, the method can comprise outputting a signal if it is determined that the subject has not entered or exited a building, the signal indicating that no entering or exiting has occurred.

In some embodiments, the method in Fig. 6 determines whether there has been a change in the indoor/outdoor status of the subject (i.e. the subject has entered or exited a building) without knowledge of an initial status of the subject (i.e. the method merely aims to detect characteristics of a transition from inside a building to outside, or vice versa). In other embodiments, the method maintains a state or status value for the subject indicating whether the subject is indoors or outdoors, and the method aims to identify the subject entering or exiting a building as appropriate for the current state or status value. Thus, when the status value indicates that the subject is indoors, the method can aim to determine if the subject has exited a building, and if the status value indicates that the subject is outdoors, the method can aim to determine if the subject has entered a building.

An initial value of an indoor/outdoor status for the subject can be preset (e.g. it may default to indoors as that is where the subject may typically activate the apparatus 52 or air pressure sensor 60), or the method may initially aim to identify both the subject entering a building and exiting a building, and set the initial status value according to the first one that is detected. In other embodiments, an initial value of an indoor/outdoor status for the subject can be input by the subject, or determined from measurements from one or more other sensors (e.g. a camera, PIR sensor, etc.).

The method can comprise updating the indoor/outdoor status value if an appropriate one of the subject entering a building and exiting a building is detected. Thus, if the indoor/outdoor status for the subject indicates that the subject is indoors, and the method determines that the subject has exited a building, then the status value can be updated accordingly. If the indoor/outdoor status for the subject indicates that the subject is outdoors, and the method determines that the subject has entered a building, then the status value can be updated accordingly. In either case, if the method does not determine that the subject has exited a building or entered a building, then the status value can be maintained at its current value. Likewise, if the indoor/outdoor status for the subject indicates that the subject is indoors, and the method determines that the subject has entered a building, then the status value can be maintained (and vice versa).

In some embodiments, measurements from one or more additional sensors can be obtained, such as an accelerometer, a location sensor, a camera, a PIR sensor and a door sensor, and the method can comprise determining whether the subject has entered or exited a building based on the determined one or more indications and the measurements from the one or more additional sensors.

In some embodiments, step 105 comprises analysing the determined first autocorrelation signal to determine a first indication of whether the subject has entered or exited a building. The first indication can be determined by determining a change between at least a first autocorrelation value in the first autocorrelation signal and a second autocorrelation value in the first autocorrelation signal relating to an earlier air pressure measurement sample, with the first indication being based on the determined change.

In particular, the first indication can be determined as indicating that the subject has entered a building if the determined change indicates an increase, and the magnitude of the increase in the first autocorrelation signal exceeds a first threshold value. The first threshold value can be a value in the range 0.2 to 0.5, for example, any of 0.2, 0.3, 0.4, or 0.5, or a percentage of the value before the increase (e.g. in the range of 5% to 10%, or 5% or 10%). On the other hand, the first indication can be determined as indicating that the subject has exited a building if the determined change indicates a decrease and the magnitude of the decrease in the first autocorrelation signal exceeds a second threshold value. The second threshold value can be a value in the range 0.2 to 0.5, for example, any of 0.2, 0.3, 0.4, or 0.5, or a percentage of the value before the decrease (e.g. in the range of 5% to 10%, or 5% or 10%). The first and second threshold values may be the same.

In some embodiments, step 103 comprises determining at least a second autocorrelation signal for the first plurality of air pressure measurement samples at a different time lag to the first autocorrelation signal (i.e. at a different time lag to the first time lag), and one or more indications can be determined from the second autocorrelation signal.

In some embodiments, the value of the first time lag used in forming the first autocorrelation signal in step 103 can depend on whether the subject is (currently) indoors or outdoors. It can be seen in Fig. 3 that the indoor-derived and outdoor-derived autocorrelation signals can vary by different amounts depending on the time lag, and thus some values of the first time lag may be more suitable for detecting a building exit than entering a building (and vice versa). In that case, step 103 can comprise determining the first autocorrelation signal using a value for the first time lag depending on whether the subject is indoors or outdoors.

In some embodiments, the method may further comprise steps for determining the first time lag to use for determining the first autocorrelation signal in step 103. The first time lag can be determined by obtaining separate sets of air pressure measurement samples for air pressures measured indoors and outdoors over a common time period, determining an autocorrelation signal as a function of time lag for each of these sets of air pressure measurement samples, and determining the first time lag by comparing the two autocorrelation signals.

One way in which the first time lag can be determined from the comparison of the two autocorrelation signals is by identifying one or more time lags at which a value of the autocorrelation signal of the indoor air pressure measurement samples differs from a value of the autocorrelation signal of the outdoor air pressure measurement samples by more than a threshold value. The threshold value can be a value in the range 0.2 to 0.5, for example, any of 0.2, 0.3, 0.4, 0.5, or a percentage of the value before the increase (e.g. in the range of 5% to 10%, or 5% or 10%). Each of the one or more threshold values for the one or more time lags can be chosen independently. Alternatively, the first time lag can be determined as a time lag at which a value of the autocorrelation signal of the indoor air pressure measurement samples differs from a value of the autocorrelation signal of the outdoor air pressure measurement samples by a maximum amount. In another alternative, a first time lag to use when a subject is known to be indoors can be determined by identifying one or more time lags at which a value of the autocorrelation signal of the indoor air pressure measurement samples matches or approximately matches (e.g. match to within 5%) a threshold value. The threshold value for the indoor measurement samples can be of the order of 0.6, 0.7 or 0.8. A first time lag to use when a subject is known to be outdoors can be determined by identifying one or more time lags (or the first time lag to be found) at which a value of the autocorrelation signal of the outdoor air pressure measurement samples matches or approximately matches (e.g. match to within 5%) a threshold value. The threshold value for the outdoor measurement samples can be of the order of 0.2, 0.3 or 0.4.

In some embodiments, step 105 comprises analysing the determined distribution of air pressures to determine one or more indications of whether the subject has entered or exited a building. For clarity, these one or more indications are referred to as a 'second indication', but it will be appreciated that multiple ones of the characteristics described below can be determined for the distribution of air pressures and used to form a single indication, or used to form respective indications.

In particular, a characteristic of the distribution of air pressures is determined, such as the variance (or other statistical dispersion measures such as interquartile range, median absolute deviation, distribution width etc.), mean (or any other central value such as median, mode, midpoint, etc.), maximum value and/or minimum value of the distribution.

The determined characteristic(s) of the distribution of air pressures are compared to corresponding characteristic(s) determined from a distribution of air pressures for another plurality of air pressure measurement samples for an earlier time period to those obtained in step 101. This comparison determines a change in the characteristic over time (a 'characteristic change'). The second indication of whether the subject has entered or exited a building is then determined based on the determined characteristic change.

The second indication can indicate that the subject has entered a building if any of:

- a variance (or other statistical dispersion measure) change indicates a decrease;
- a mean (or other central value) change indicates an increase when the temperature outside is colder than inside, or a decrease when the temperature outside is warmer than inside (this is because the direction in which a mean changes is dependent on the temperature difference caused by the transition);

- a maximum value change indicates an increase when the temperature outside is colder than inside, or a decrease when the temperature outside is warmer than inside (this is because the direction in which a maximum changes is dependent on the temperature difference caused by the transition);
- a minimum value change indicates an increase when the temperature outside is colder than inside, or a decrease when the temperature outside is warmer than inside (this is because the direction in which a maximum changes is dependent on the temperature difference caused by the transition).

In each of the above examples, the second indication may indicate that the subject has entered a building if any change in the required direction is detected. However, it will be appreciated that, in each of the above examples, the magnitude of the characteristic change can be required to exceed a threshold value before the indication indicates that the subject has entered a building.

The second indication can indicate that the subject has exited a building if any of:

- a variance (or other statistical dispersion measure) change indicates an increase (the variance also tends to increase with more stormy weather conditions);
- a mean (or other central value) change indicates a decrease when the temperature outside is colder than inside, or an increase when the temperature outside is warmer than inside (this is because the direction in which a mean changes is dependent on the temperature difference caused by the transition);
- a maximum value change indicates a decrease when the temperature outside is colder than inside, or an increase when the temperature outside is warmer than inside (this is because the direction in which a maximum changes is dependent on the temperature difference caused by the transition);
- a minimum value change indicates a decrease when the temperature outside is colder than inside, or an increase when the temperature outside is warmer than inside (this is because the direction in which a maximum changes is dependent on the temperature difference caused by the transition).

In each of the above examples, the second indication may indicate that the subject has exited a building if any change in the required direction is detected. However, it will be appreciated that, in each of the above examples, the magnitude of the characteristic change can be required to exceed a threshold value before the indication indicates that the subject has exited a building.

In both of the above examples, it will be appreciated that if the indoor/outdoor status of the subject is known, only the criteria relating to the relevant transition may be tested for in step 105 to determine the second indication. For example, if the subject is currently indoors, an exit may be indicated by the second indication if the variance (or other statistical dispersion measure) change indicates an increase (or increase more than a threshold), but the second indication will indicate 'no exit' if the variance (or other statistical dispersion measure) change indicates a decrease (or an increase less than the threshold).

In some embodiments, step 105 comprises analysing the determined distribution of air pressure differences to determine one or more indications of whether the subject has entered or exited a building. For clarity, these one or more indications are referred to as a 'third indication', but it will be appreciated that multiple ones of the characteristics described below can be determined for the distribution of air pressure differences and used to form a single indication, or used to form respective indications.

In particular, a characteristic of the distribution of air pressure differences is determined, such as the variance (or other statistical dispersion measures such as interquartile range, median absolute deviation, distribution width etc.), mean (or any other central value such as median, mode, midpoint, etc.), maximum value and/or minimum value of the distribution.

The determined characteristic(s) of the distribution of air pressure differences are compared to corresponding characteristic(s) determined from a distribution of air pressure differences for another plurality of air pressure measurement samples for an earlier time period to those obtained in step 101. This comparison determines a change in the characteristic over time (a 'characteristic change'). The third indication of whether the subject has entered or exited a building is then determined based on the determined characteristic change.

The third indication can indicate that the subject has entered a building if any of:

- a variance (or other statistical dispersion measure) change indicates a decrease;
- a mean (or other central value) change indicates an increase when the temperature outside is colder than inside, or a decrease when the temperature outside is warmer than inside (this is because the direction in which a mean changes is dependent on the temperature difference caused by the transition);
- a maximum value change indicates a decrease;

- a minimum value change indicates an increase.

In each of the above examples, the third indication may indicate that the subject has entered a building if any change in the required direction is detected. However, it will be appreciated that, in each of the above examples, the magnitude of the characteristic change can be required to exceed a threshold value before the indication indicates that the subject has entered a building.

The third indication can indicate that the subject has exited a building if any of:

- a variance (or other statistical dispersion measure) change indicates an increase;
- a mean (or other central value) change indicates a decrease when the temperature outside is colder than inside, or an increase when the temperature outside is warmer than inside (this is because the direction in which a mean changes is dependent on the temperature difference caused by the transition);
- a maximum value change indicates an increase;
- a minimum value change indicates a decrease.

In each of the above examples, the third indication may indicate that the subject has exited a building if any change in the required direction is detected. However, it will be appreciated that, in each of the above examples, the magnitude of the characteristic change can be required to exceed a threshold value before the indication indicates that the subject has exited a building.

In both of the above examples, it will be appreciated that if the indoor/outdoor status of the subject is known, only the criteria relating to the relevant transition may be tested for in step 105 to determine the third indication. For example, if the subject is currently indoors, an exit may be indicated by the third indication if the variance (or other statistical dispersion measure) change indicates an increase (or increase more than a threshold), but the third indication will indicate 'no exit' if the variance (or other statistical dispersion measure) change indicates a decrease (or an increase less than the threshold).

It will be appreciated that the variance (var) in the distribution of air pressure changes ($\Delta p$) at time lag $\Delta t$ can be expressed as follows:

$$\mathbf{var(\Delta p)} = var(p[t] - p[t-\Delta t])$$

$$= var(p[t]) - 2\,cov(p[t],p[t-\Delta t]) + var(p[t-\Delta t])$$

$$= 2var(p[t]) - 2R(p[t])[\Delta t]$$

$$= 2\sigma^2 [\,1 - \boldsymbol{\rho_P[\Delta t]}\,]$$

$\rho_P[\Delta t]$ is also the definition of autocorrelation at lag $\Delta t$. Thus, by definition, the autocorrelation equals 1 at $\Delta t = 0$, and decreases with increasing lag ($\Delta t = 0$), eventually vanishing for very large lags ($\Delta t \rightarrow \infty$). $\sigma^2$ is the variance in the air pressure itself (discussed above with reference to the distribution of air pressures. Therefore, the variance in air pressure differences is itself composed of two effects: increased variance in air pressure and decreased autocorrelation when exiting a building.

In any of the above examples and embodiments where a threshold is used, the threshold may be fixed, or it may be adaptive. In that case, the value of the threshold may be determined based on a previous set of air pressure measurements, means, variances, maxima, minima, etc. (as appropriate for whatever the threshold is used for). For example a threshold can be determined as a function of an average (e.g. mean) of the most recent measurements or values appropriate to that threshold. The threshold value may be set at some multiple of the average. For example measurements for the last 5 minutes or 10 minutes may be used, with the threshold value being equal to 2*mean (e.g.).

Therefore there is provide an alternative approach to determining whether a subject has entered or exited a building that makes use of air pressure measurements and can detect an entering or an exit in a low power and efficient way.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. An apparatus (52) for determining whether a subject has entered or exited a building, wherein the apparatus (52) is configured to:

obtain air pressure measurements from an air pressure sensor (58; 60) associated with the subject, wherein the air pressure measurements comprise a first plurality of air pressure measurement samples;
determine one or more of:

(i) a first autocorrelation signal for the first plurality of air pressure measurement samples at a first time lag;
(ii) a distribution of air pressures for the first plurality of air pressure measurement samples;
(iii) a distribution of air pressure differences for the first plurality of air pressure measurement samples, wherein each air pressure difference is the difference between the value of a first air pressure measurement sample in the first plurality of air pressure measurement samples and the value of an air pressure measurement sample in the first plurality of air pressure measurement samples that is a second time lag before the first air pressure measurement sample; and

analyse the determined first autocorrelation signal, the determined distribution of air pressures and/or determined distribution to determine one or more indications of whether the subject has entered or exited a building; and
determine whether the subject has entered or exited a building based on the determined one or more indications.

2. An apparatus (52) as claimed in claim 1, wherein the apparatus is configured to analyse the determined first autocorrelation signal to determine a first indication of whether the subject has entered or exited a building by:

determining a change between at least a first autocorrelation value in the first autocorrelation signal and a second autocorrelation value in the first autocorrelation signal relating to an earlier air pressure measurement sample;
wherein the apparatus is configured to determine the first indication of whether the subject has entered or exited a building based on the determined change.

3. An apparatus (52) as claimed in claim 2, wherein the apparatus is configured to:

determine the first indication as indicating that the subject has entered a building if the determined change indicates an increase and the magnitude of the increase in the first autocorrelation signal exceeds a first threshold value.

4. An apparatus (52) as claimed in claim 2 or 3, wherein the apparatus is configured to:

determine the first indication as indicating that the subject has exited a building if the determined change indicates a decrease and the magnitude of the decrease in the first autocorrelation signal exceeds a second threshold value.

5. An apparatus (52) as claimed in any of claims 1-4, wherein the apparatus is further configured to determine the first time lag to use for determining the first autocorrelation signal by:

obtaining a second plurality of air pressure measurement samples for air pressure measurements inside a building during a first time period;
obtaining a third plurality of air pressure measurement samples for air pressure measurements outside a building during the first time period;
determining the autocorrelation of the second plurality of air pressure measurement samples as a function of time lag;
determining the autocorrelation of the third plurality of air pressure measurement samples as a function of time lag;
comparing the determined autocorrelation of the second plurality of air pressure measurement samples and the determined autocorrelation of the third plurality of air pressure measurement samples to determine the first time lag.

6. An apparatus (52) as claimed in any of claims 1-5, wherein the apparatus is configured to analyse the determined distribution of air pressures to determine a second indication of whether the subject has entered or exited a building by:

    determining a characteristic of the distribution of air pressures; and
    determining a second indication of whether the subject has entered or exited a building based on the determined characteristic;
    wherein the characteristic is one or more of a statistical dispersion measure, a central value, a maximum value and a minimum value.

7. An apparatus (52) as claimed in claim 6, wherein the apparatus is configured to:

    determine a characteristic change by comparing the determined characteristic to a characteristic determined from a second plurality of air pressure measurement samples for an earlier time period;
    wherein the apparatus is configured determine the second indication of whether the subject has entered or exited a building based on the determined characteristic change.

8. An apparatus (52) as claimed in any of claims 1-7, wherein the apparatus is configured to analyse the determined distribution of air pressure differences to determine a third indication of whether the subject has entered or exited a building by:

    determining a characteristic of the distribution of air pressure differences; and
    determining a third indication of whether the subject has entered or exited a building based on the determined characteristic;
    wherein the characteristic is one or more of a statistical dispersion measure, a central value, a maximum value and a minimum value.

9. An apparatus (52) as claimed in claim 8, wherein the apparatus is configured to:

    determine a characteristic change by comparing the determined characteristic to a characteristic determined from a second plurality of air pressure measurement samples for an earlier time period;
    wherein the apparatus is configured determine the third indication of whether the subject has entered or exited a building based on the determined characteristic change.

10. A computer-implemented method of determining whether a subject has entered or exited a building, the method comprising:

    obtaining (101) air pressure measurements from an air pressure sensor associated with the subject, wherein the air pressure measurements comprise a first plurality of air pressure measurement samples;
    determining (103) one or more of:

        (i) a first autocorrelation signal for the first plurality of air pressure measurement samples at a first time lag;
        (ii) a distribution of air pressures for the first plurality of air pressure measurement samples;
        (iii) a distribution of air pressure differences for the first plurality of air pressure measurement samples, wherein each air pressure difference is the difference between the value of a first air pressure measurement sample in the first plurality of air pressure measurement samples and the value of an air pressure measurement sample in the first plurality of air pressure measurement samples that is a second time lag before the first air pressure measurement sample; and

    analysing (105) the determined first autocorrelation signal, the determined distribution of air pressures and/or determined distribution to determine one or more indications of whether the subject has entered or exited a building; and
    determining (107) whether the subject has entered or exited a building based on the determined one or more indications.

11. A method as claimed in claim 10, wherein the method comprises analysing (105) the determined first autocorrelation signal to determine a first indication of whether the subject has entered or exited a building by:

determining a change between at least a first autocorrelation value in the first autocorrelation signal and a second autocorrelation value in the first autocorrelation signal relating to an earlier air pressure measurement sample;
wherein the apparatus is configured to determine the first indication of whether the subject has entered or exited a building based on the determined change.

12. A method as claimed in claim 10 or 11, wherein the method comprises analysing (105) the determined distribution of air pressures to determine a second indication of whether the subject has entered or exited a building by:

determining a characteristic of the distribution of air pressures; and
determining a second indication of whether the subject has entered or exited a building based on the determined characteristic;
wherein the characteristic is one or more of a statistical dispersion measure, a central value, a maximum value and a minimum value.

13. A method as claimed in claims 10-12, wherein the method comprises analysing (105) the determined distribution of air pressure differences to determine a third indication of whether the subject has entered or exited a building by:

determining a characteristic of the distribution of air pressure differences; and
determining a third indication of whether the subject has entered or exited a building based on the determined characteristic;
wherein the characteristic is one or more of a statistical dispersion measure, a central value, a maximum value and a minimum value.

14. A method as claimed in claim 13, wherein the method comprises:

determining a characteristic change by comparing the determined characteristic to a characteristic determined from a second plurality of air pressure measurement samples for an earlier time period;
wherein the method comprises determining the third indication of whether the subject has entered or exited a building based on the determined characteristic change.

15. A computer program product comprising a computer readable medium having computer readable code embodied therein, the computer readable code being configured such that, on execution by a suitable computer or processor, the computer or processor is caused to perform the method of any of claims 10-14.

Fig. 1

Fig. 2

Fig. 3

Fig. 5

Obtain air pressure measurements — 101

Determine one or more of a first autocorrelation signal, a distribution of air pressures and a distribution of air pressure differences — 103

Analyse the first autocorrelation signal and/or distributions to determine one or more indications of whether the subject has entered or exited a building — 105

Determine whether the subject has entered or exited a building based on the determined one or more indications — 107

Fig. 6

Fig. 7

Europäisches
Patentamt

European
Patent Office

Office européen
des brevets

# EUROPEAN SEARCH REPORT

Application Number

EP 17 21 0483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/286556 A1 (YUMOTO TAKU [JP] ET AL) 19 November 2009 (2009-11-19) | 1,10,15 | INV. G01C21/16 |
| A | * paragraph [0030]; figures 2,3 * | 2-9, 11-14 | G01S19/49 G06K9/00 |
| A | US 2006/232472 A1 (ROSLAK THOMAS K [US]) 19 October 2006 (2006-10-19) * paragraph [0008] * | 1-15 | |
| A | JP 2010 145228 A (SANYO ELECTRIC CO) 1 July 2010 (2010-07-01) * abstract * | 1-15 | |
| A | CN 104 457 751 A (INST COMPUTING TECH CN ACADEMY) 25 March 2015 (2015-03-25) * the whole document * | 1-15 | |

TECHNICAL FIELDS
SEARCHED      (IPC)

G01C
G01S
G06K

The present search report has been drawn up for all claims

| Place of search | Date of completion of the search | Examiner |
|---|---|---|
| Munich | 4 June 2018 | Kurzbauer, Werner |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 21 0483

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2018

| Patent document cited in search report | Publication date | Patent family member(s) | Publication date |
|---|---|---|---|
| US 2009286556 A1 | 19-11-2009 | NONE | |
| US 2006232472 A1 | 19-10-2006 | US 2006232472 A1<br>WO 2006105489 A2 | 19-10-2006<br>05-10-2006 |
| JP 2010145228 A | 01-07-2010 | NONE | |
| CN 104457751 A | 25-03-2015 | NONE | |

EPO FORM P0459

For more details about this annex : see Official Journal of the European Patent Office, No. 12/82